# EUROPEAN PATENT SPECIFICATION

(11) **EP 4 005 446 B1**
(45) Date of publication and mention of the grant of the patent: **23.04.2025**
(21) Application number: 20217435.5
(22) Date of filing: 28.12.2020
(51) Int. Cl.: A47K 13/12, A47K 13/26

(54) **TOILET SEAT HINGE QUICK DISASSEMBLY AND ASSEMBLY DEVICE AND ITS APPLICATION**
VORRICHTUNG ZUR SCHNELLEN DEMONTAGE UND MONTAGE EINES TOILETTENSITZSCHARNIERS UND DEREN ANWENDUNG
DISPOSITIF DE DÉMONTAGE ET DE MONTAGE RAPIDE DE LA CHARNIÈRE DE SIÈGE DE TOILETTE ET SON APPLICATION

(30) Priority: 30.11.2020 CN 202011370577
(43) Date of publication of application: 01.06.2022
(73) Proprietor: Zhongshan Meitu Plastic Ind. Co., Ltd., Zhongshan City, Guangdong 528400 (CN)
(72) Inventor: ZHOU, Wenhui, Zhongshan, Guangdong (CN); HUANG, Haojia, Zhongshan, Guangdong (CN); ZHANG, Hai, Zhongshan, Guangdong (CN)
(74) Representative: Bayramoglu et al.

(56) References cited:
- CN-U- 205 197 893
- CN-U- 209 203 115

## Description

### Technical Field

The present disclosure relates to the toilet field, and the invention is directed towards a toilet seat hinge quick disassembly and assembly device.

### Background of the Invention

In existing technology, the conventional seat hinge, the cover plate and the seat ring are independent separate design, and the seat hinge, the cover plate and the seat ring are usually fixedly connected and cannot be disassembled.

In view of above problem, the utility model patent with the publication number of CN204181547U has disclosed a simple pressing and disassembling device for the toilet seat ring cover plate, which includes a seat ring cover plate connector for opening and closing, a seat ring cover plate connecting frame and an assembly and disassembly connection unit. The seat ring cover plate connecting frame is connected between the toilet and the assembly and disassembly connection unit, and the assembly and disassembly connection unit includes a connector, a spring and a pressing button. The one end of the connector is connected is inserted in the toilet seat ring, and the other end of the connector is exposed outside the toilet seat ring. The pressing button includes a pushing plate and a button plate. The button plate is fixedly connected to the rear end of the pushing plate. The pushing plate is provided with a locking slot. The top of the connecting column is arranged in the locking slot, and the spring is arranged between the front end of the pushing plate and the connector.

Although the utility model patent is convenient for disassembly and assembly to a certain extent, there are the following problems: the utility model has two pressing buttons, and it is necessary to press the buttons on both sides at the same time to pull out the seat hinge during disassembly, which has complex structure, complicated disassembly steps and inconvenient disassembly and assembly.

For this reason, the utility model patent with the publication number of CN203861109U discloses a quick disassembly connection mechanism between the toilet cover plate and the toilet seat body, including: a fixed shaft, wherein the fixed shaft is provided with an insertion hole for inserting a locking rod fixed on the toilet seat body along the radial direction; a groove is arranged on the outer surface of the locking rod; and a lock piece which can be moved back and forth along the axial direction and inserted with the fixed shaft, and the lock piece is provided with an inserting piece for inserting into the groove to lock the locking rod; an elastic member for pushing up the lock piece to make the inserting piece move along the axial direction and insert into the groove; a control rotating shaft located at one end of the fixed shaft far away from the lock piece and rotating synchronously with the toilet cover plate. The control rotating shaft is provided with a convex rib extending towards one side of the lock piece, and the lock piece is provided with a baffle arm corresponding to the convex rib. When the toilet cover plate is lifted from the position of closing the toilet seat body by 70-90 degrees, the convex rib pushes up the baffle arm to separate the inserting piece from the groove. Lifting the cover plate, the convex rib pushes the retaining arm to separate the inserting piece from the locking rod, so that the cover plate can be directly removed from the seat body, which has the advantage of simple operation.

Although the utility model patent solves the problem that the traditional toilet seat hinge can only be pulled out by pressing the button on both sides at the same time, there are still the following problems: the damper of the utility model is stored in the control rotating shaft and is clamped with the control rotating shaft in the circumferential direction, the lock piece of the utility model is stored in the fixed shaft, and the two baffle arms are respectively stored in two sliding grooves, so as to make the machining accuracy and difficulty of the damper and the control rotating shaft and the lock piece and the fixed shaft high, and the manufacturing cost is high. At the same time, the structure of the baffle arm and the sliding groove will cause the decreasing of the strength of the lock piece and the fixed shaft, which is easy to cause the parts to break, damage and failure, and when disassembling and assembling the damper, the control rotating shaft, and the lock piece and the fixed shaft, the blind spot is large and the disassembly is difficult.

In view of that, the utility model patent with the publication number of CN205197893U discloses a toilet seat hinge quick disassembling and assembling Z device according to the preamble of claim 1, comprising a mechanism of the toilet cover plate and the seat body, and the cover plate with the mechanism, which includes an insertion shaft, which is fixed on the toilet seat body; a fixing part, which is provided with an insertion hole and a slot intersecting with the insertion hole; a lock piece, which can move back and forth along the axial direction of the fixing part, and has a locking plate which is matched with the slot of the fixed part, the locking plate can realize the locking or unlocking of the inserting shaft by inserting or withdrawing from the groove on the insertion shaft; the elastic piece is used to push up the locking piece to make the locking plate insert into the groove of the insertion shaft. And further, a unlocking button is also provided, wherein the unlocking button is rotated synchronously with the cover plate, which is rotatably arranged on the fixing part and is axially limited on the fixed part. The unlocking button is provided with a convex part towards the lock piece, and the lock piece is provided with an abutting part corresponding to the convex part. When the unlocking button rotates to a predetermined angle with the cover plate, the convex part and the abutting part cooperate to drive the locking plate to withdraw from the groove. When the cover plate is rotated to the predetermined angle, the cover plate can be disassembled quickly without pressing keys, and the structure is compact, the assembly process is simple, and the cost can be effectively reduced.

Although the utility model patent solves the problem of pulling out the seat hinge by pressing the button on both sides at the same time when the traditional toilet is disassembled, there are still the following problems: first, the free end of the locking plate on the lock piece is inserted into the slot correspondingly, the free end of the baffle arm is correspondingly inserted into the sliding groove, and the fixed shaft is cylindrical, so that the fixed shaft and lock piece are hard to manufacture, and the manufacturing cost is high. At the same time, the structure of the fixed shaft and the lock piece will lead to the decrease of its strength, which is easy to cause the parts to break, damage and failure. In addition, when the fixed shaft and lock piece are disassembled and assembled, the blind spot is big and the disassembly is difficult. Next, the two lock pieces share one elastic piece, the lock clamping fastener is required high installation accuracy during the assembly and the installation is difficult, and the two lock pieces share the one elastic piece during the disassembly, as a result, the displacements of the elastic piece caused by the compression of the elastic piece by the two lock pieces is not the same, which will cause that the lock piece and the insertion shaft are not separated and clamped, and the accuracy of disassembly and assembly is low.

Therefore, the existing technology cannot meet the requirements.

### Summary of the Invention

To solve the above problems, a toilet seat hinge quick disassembly and assembly device according to claim 1 is provided by the present disclosure.

To achieve the above objective, the present disclosure provides the following technical solutions:A toilet seat hinge quick disassembly and assembly device, including a fixed seat and a buffer detachably connected to the fixed seat, the device further includes a hinge tube, and a fixing device driving the buffer to be clamped with or separated from the fixed seat, and the fixing device includes a locking member, a driving member driving the locking member separated from the fixed seat and a spring keeping a snap-fit of the locking member and the fixed seat, the driving member is fixedly fixed in the hinge tube circumferentially; the buffer includes a hinge body, and an outer circumference of the hinge body is provided with an accommodation groove; the driving member is rotatably arranged in the accommodation groove, the driving member is provided with a guide sliding surface, the locking member is provided with a driving portion matched with the guide sliding surface; the locking member is provided with a transverse locking portion, and one side of the transverse locking portion is provided with a clamping hole for inserting the fixed seat when assembly, an inner wall of the clamping hole is provided with a clamping portion clamped with the fixed seat; the hinge body is provided with a movable space and an accommodation hole; the transverse locking portion is slidably arranged in the movable space, and one side of the movable space facing the accommodation groove is provided with a first opening, an inner wall of the accommodation groove is provided with a second opening communicated with the accommodation hole; the other side of the transverse locking portion extends downward to form a vertical driving rod inserted in the accommodation hole after assembly; one end of the spring is against on a bottom wall of the accommodation hole; the other end of the spring is against on a side of the vertical driving rod away from the driving portion; an angle α is formed between the transverse locking portion and the vertical driving rod, and the angle α is a right angle or an inclined angle.

As a preferred embodiment, it is further defined as: the driving member is provided with a low position locking portion and a high position unlocking portion between the two sliding guide surfaces, and the sliding guiding surface is configured to connect the high position unlocking portion and the low position locking portion; the buffer is clamped with the fixed seat through the fixing device when the driving portion contacts with the low position locking portion; the driving portion slides along the sliding surface when the driving member is rotated; the buffer is disconnected from the fixed seat when the driving portion slides to the high position unlocking portion.

As a preferred embodiment, it is further defined as: the driving member is provided with a raised low position limiting portion, and the low position locking portion is arranged between the sliding guide surface and the low position limiting portion.

As a preferred embodiment, it is further defined as: the two sides of the driving portion are provided with a limit surface matched with the low position limiting portion and a buffer surface matched with the high position unlocking portion.

According to the invention, it is further defined as: a raised clamping rib is arranged on a periphery of the driving member, an accommodation cavity for accommodating the hinge body is arranged in the hinge tube, and a first clamping groove for inserting the clamping rib is arranged on an inner wall of the accommodation cavity.

According to the invention, it is further defined as: a third opening communicated with the accommodation cavity is respectively arranged on both sides of the hinge tube, and a clamping fastener for fixing the buffer is provided in the third opening.

As a preferred embodiment, it is further defined as: the outer peripheral surfaces of the hinge body corresponding to two sides of the third opening are provided with annular grooves, both sides of the clamping fastener are provided with snapping portions inserted into the annular grooves after assembly, and the snapping portions extend outward to form a step structure that snaps the inner wall of the accommodation cavity after assembly; the fixed seat includes a bottom base and a clamping column inserted into the hinge body when assembly; the clamping fastener is provided with a through hole for the clamping column to pass through during assembly.

As a preferred embodiment, it is further defined as: one end of the clamping column is fixedly connected to the bottom base, and an outer peripheral surface of the other end of the clamping column is provided with an inward depression to form a clamping groove matched with the clamping portion.

As a preferred embodiment, it is further defined as: the hinge body is provided with a first insertion hole, wherein the first insertion hole is a vertical opening and is configured for inserting the clamping column during assembly; the movable space is arranged at an upper end of the first insertion hole and is communicated with the first insertion hole, and the clamping hole is aligned to the first insertion hole when the locking member is slidably provided and snapped in the hinge body.

As a preferred embodiment, it is further defined as: the driving portion is fixedly arranged at an upper end of the vertical driving rod, so that the driving portion is slidably arranged on the opening after assembly.

As a preferred embodiment, it is further defined as: the buffer includes a panel oil core, the hinge body is provided with a second insertion hole, the panel oil core is provided with an raised insertion portion inserted into the second insertion hole during assembly; the seat ring includes a seat ring body and hinge holes, the hinge tube is fixedly connected to the seat ring body and arranged between the two hinge holes; one end of the panel oil core is inserted into the hinge hole, the panel oil core passes through the hinge hole during assembly, so that the insertion portion is inserted into the second insertion hole.

A toilet combined cover plate with a toilet seat hinge quick disassembly and assembly device, including a cover plate and a seat ring, and a hinged tube (6) is fixedly connected to the seat ring, the cover plate is rotatably connected to the seat ring through a buffer, and the seat ring is detachably connected to the fixed seat through the buffer.

A toilet with a toilet seat hinge quick disassembly and assembly device, including a cover plate, a seat ring, a base and a water tank, and a hinge tube is fixedly connected to the seat ring, the water tank is fixedly arranged on the base, a fixed seat is fixedly connected to the base, the cover plate is rotatably connected to the seat ring through a buffer, and the seat ring is detachably connected to the fixed seat through the buffer.

The advantageous effects of the present disclosure are as follows:
- 1. The buffer of the present disclosure is provided with a fixing device, the buffer is an independent whole with simple structure and firm parts, which has a low manufacturing cost, and the assembly of the buffer can be completed independently and then assembled with the cover plate and seat ring, the disassembly and replacement are simple and fast, and the buffer can operate independently in use, and is not affected by other factors, and has high accuracy of disassembly and assembly;
- 2. The present disclosure is provided with a clamping fastener, which can limit the axial movement of buffer after assembly, and at the same time, the structure design is ingenious, the disassembly and assembly is simple, and the parts can be assembled and replaced quickly;
- 3. During disassembly, it is only necessary to rotate the seat ring to drive the driving member to rotate till the driving portion of the driving member touches the high position unlocking portion, the locking member moves smoothly along the axis direction of the hinge body, so that the clamping portion on the locking member is separated from the clamping groove, and the seat ring and the cover plate can be directly taken out, which is convenient and fast; while during assembly, the clamping column of the seat hinge is inserted into the first insertion hole, and the seat ring and the cover plate are rotated to cover on the toilet to complete the assembly, which has an ingenious design, simple structure, and easy to disassembly, and the operation can be completed by one hand, which greatly improves the user's experience.

### Brief description of the Drawings

- Fig. 1 is the first the structural diagram of the present disclosure;
- Fig. 2 is the second structural diagram of the present disclosure;
- Fig. 3 is an exploded view of the present disclosure;
- Fig. 4 is a transverse sectional view of the present disclosure in the locking state;
- Fig. 5 is an enlarged schematic diagram of the portion A as shown in Fig. 4 ;
- Fig. 6 is a partial schematic diagram of the present disclosure in the locking state;
- Fig. 7 is a partial sectional view of the present disclosure in the unlocking state;
- Fig. 8 is an enlarged schematic diagram of the portion B as shown in Fig. 7 ;
- Fig. 9 is a partial schematic diagram of the present disclosure in the unlocking state;
- Fig. 10 is a structural schematic diagram of the hinge body;
- Fig. 11 is a transverse sectional view of the hinge body;
- Fig. 12 is a structural schematic diagram of the panel oil core;
- Fig. 13 is a structural schematic diagram of a locking member;
- Fig. 14 is a structural schematic diagram of a driving member;
- FIG. 15 is a structural schematic diagram of the hinge tube;
- FIG. 16 is a structural schematic diagram of the clamping fastener.

### Detailed Description of Embodiments

The present disclosure is further described in detail with reference to the attached drawings and specific embodiments

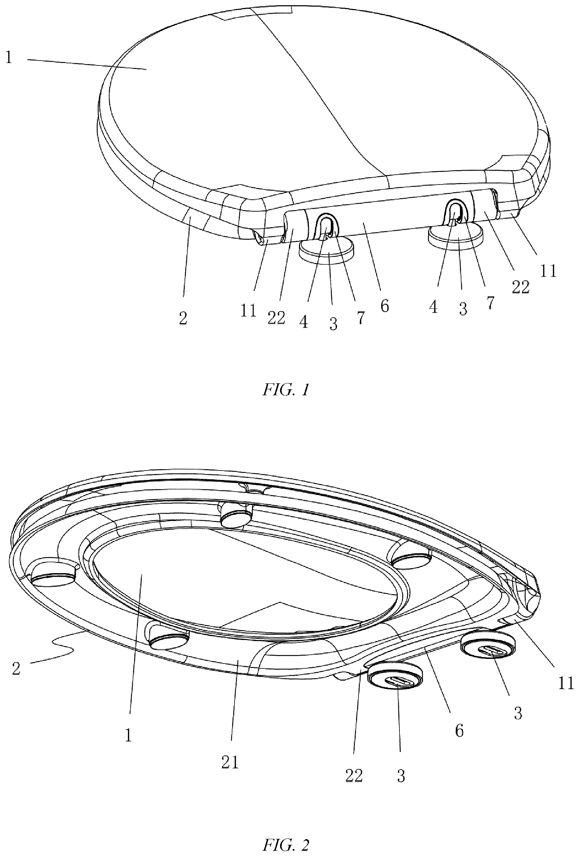

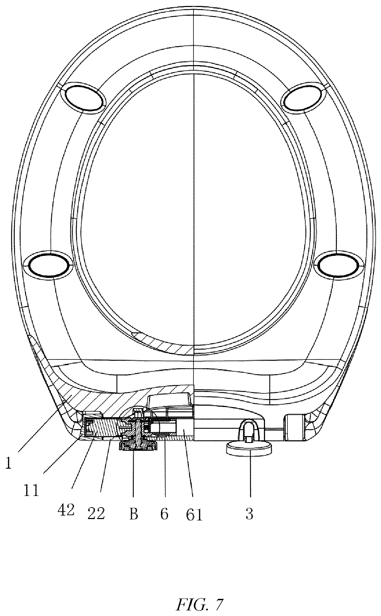

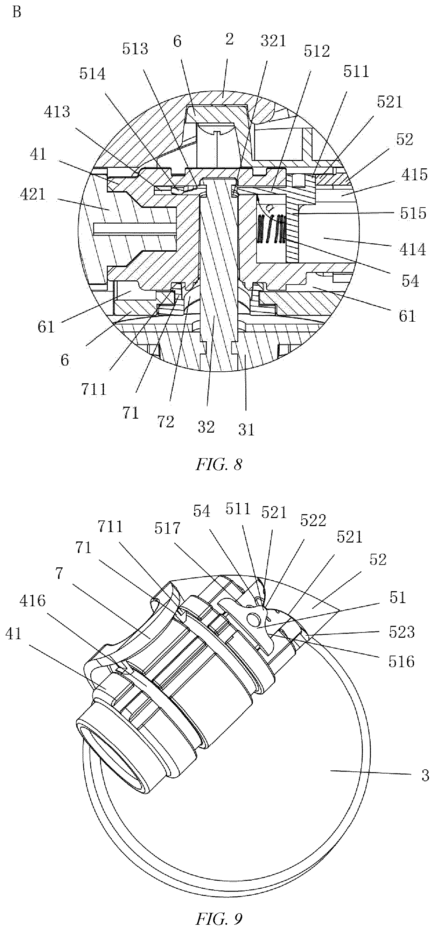

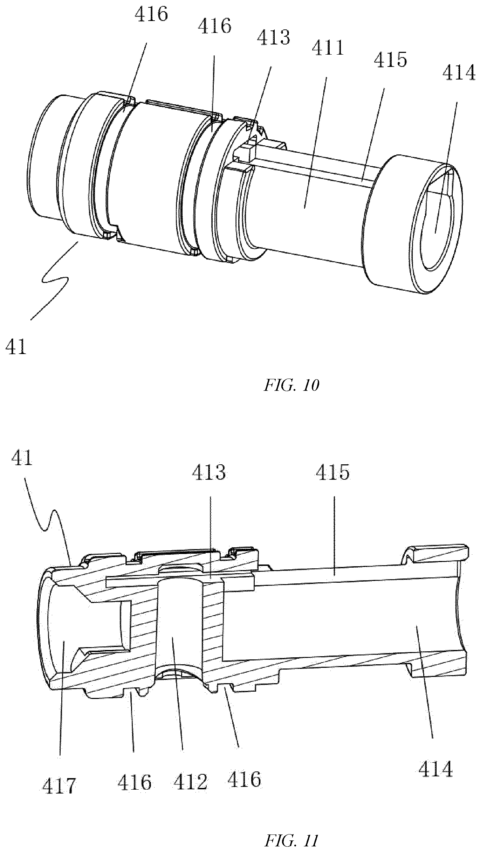

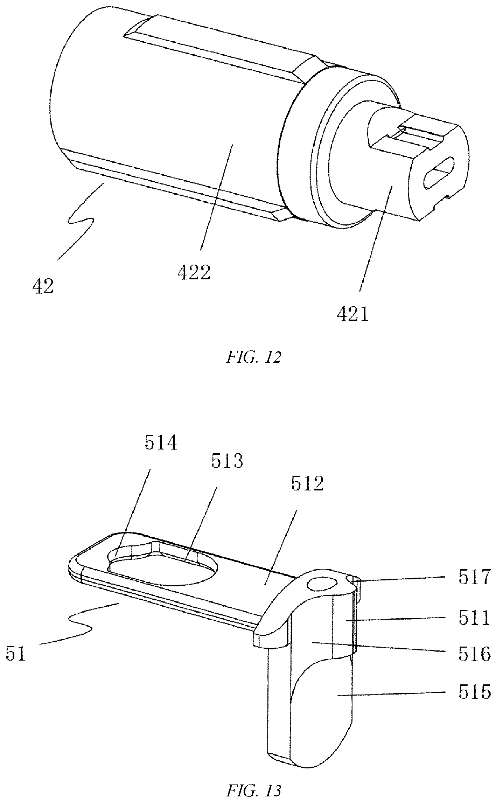

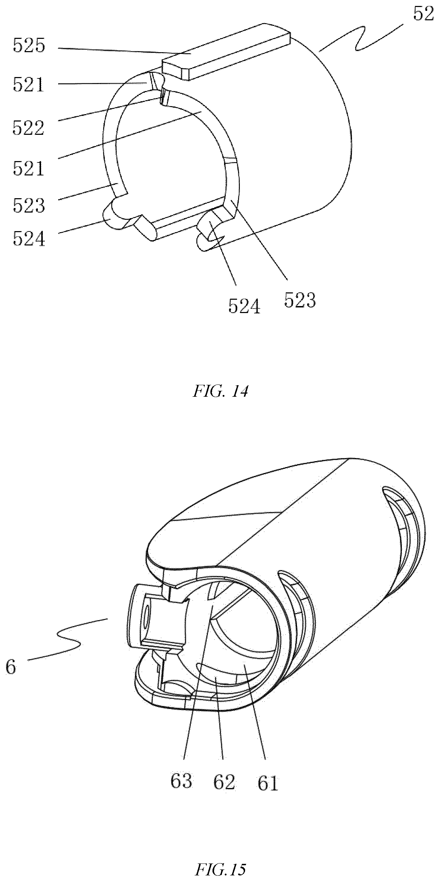

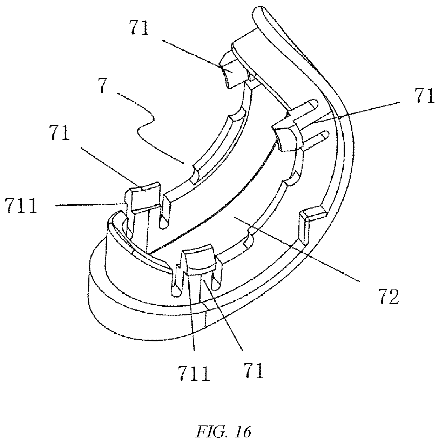

As shown in Fig. 1 to Fig. 16, a toilet seat hinge quick disassembly and assembly device, including a fixed seat 3 and a buffer 4 detachably connected to the fixed seat 3. The device further comprising a hinge tube 6, and a fixing device 5 which drives the buffer 4 to be clamped with or separated from the fixed seat 3. And the fixing device 5 includes a locking member 51, a driving member 52 which drives the locking member 51 separated from the fixed seat 3 and a spring 53 that keeps a snap-fit of the locking member 51 and the fixed seat 3. The driving member 52 is fixedly fixed in the hinge tube 6 circumferentially. The buffer 4 includes a hinge body 41, and the outer circumference of the hinge body 41 is provided with an accommodation groove 411. The driving member 52 is rotatably arranged in the accommodation groove 411, the driving member 52 is provided with a guide sliding surface 521, the locking member 51 is provided with a driving portion 511 matched with the guide sliding surface 521. The locking member 51 is provided with a transverse locking portion 512, and one side of the transverse locking portion 512 is provided with a clamping hole 513 for inserting the fixed seat 3 when assembly, and the inner wall of the clamping hole 513 is provided with a clamping portion 514 which is clamped with the fixed seat 3. The hinge body 41 is provided with a movable space 413 and an accommodation hole 414. The transverse locking portion 512 is slidably arranged in the movable space 413, and one side of the movable space 413 facing the accommodation groove 411 is provided with the first opening, the inner wall of the accommodation groove 411 is provided with the second opening 415 communicated with the accommodation hole 414. The other side of the transverse locking portion 512 extends downward to form a vertical driving rod 515 inserted in the accommodation hole 414 after assembly. One end of the spring 54 is against on the bottom wall of the accommodation hole 414, and the other end of the spring 54 is against on the side of the vertical driving rod 515 away from the driving portion 511. An angle α is formed between the transverse locking portion 512 and the vertical driving rod 515, and the angle α is a right angle or an inclined angle. The driving portion 511 is fixedly arranged at the upper end of the vertical driving rod 515, so that the driving part 511 is slidably arranged on the opening 415 after assembly. Furthermore, the included angle can be obtuse angle or acute angle, as long as the other end of the spring 54 is against on the vertical driving rod 515. At the same time, the vertical driving rod 515 is slidably arranged in the accommodation hole 414, and the fixing device 5 is provided in the buffer 4. The buffer 4 is an independent whole with simple structure, firm parts and low manufacturing cost, which can be assembled independently and then assembled with the cover plate 1 and seat ring 2. The disassembly and replacement are simple and fast, and the buffer can operate independently in use, and is not affected by other factors and has high accuracy of disassembly and assembly.

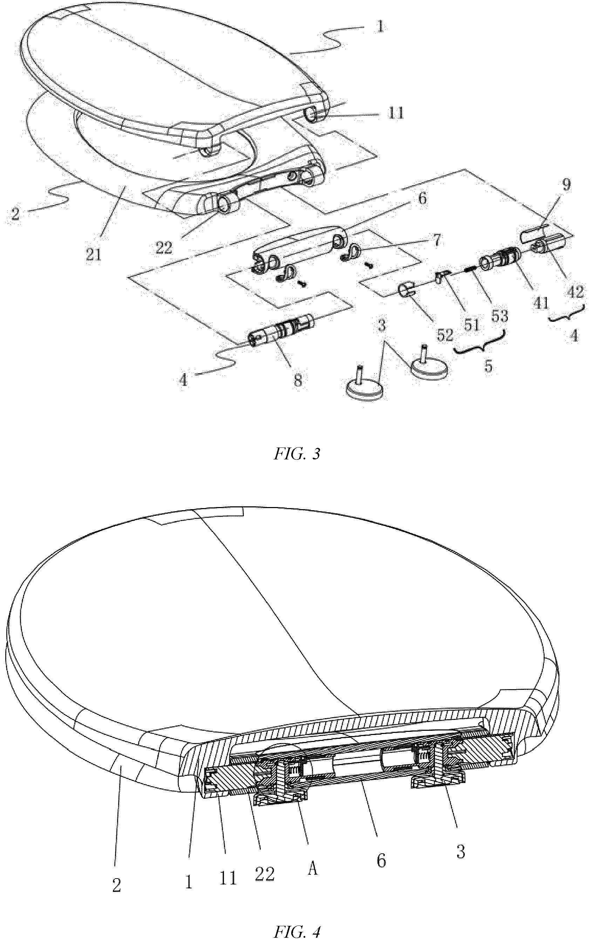

As shown in Figs. 4 to Figs.9 and Figs.13 to Figs.14 , in the present embodiment, the driving member 52 is provided with a low position locking portion 523 and a high position unlocking portion 522 between the two sliding guide surfaces 521, and the sliding guiding surface 521 is configured to connect the high position unlocking portion 522 and the low position locking portion 523. The buffer 4 is clamped with the fixed seat 3 through the fixing device 5 when the driving portion 511 contacts with the low position locking portion 523. The driving portion 511 slides along the sliding surface 521 when the driving member 52 is rotated, and the buffer 4 is disconnected from the fixed seat 3 when the driving portion 511 slides to the high position unlocking portion 522. The sliding guide surface 521 is arranged between the high position unlocking portion 522 and the low position locking portion 523. During unlocking and locking, the sliding guide surface 521 contacts with the driving portion 511, so that the driving portion 511 moves steadily, and the locking member 51 moves steadily along the axis direction of the hinge body 41.

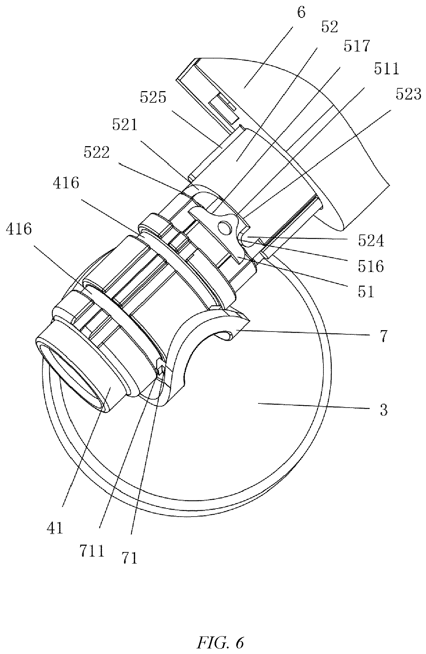

As shown in Figs. 4 to Figs.9 and Figs.13 to Figs.14 , in the present embodiment, the driving member 52 is provided with a raised low position limiting portion 524, and the low position locking portion 523 is arranged between the sliding guide surface 521 and the low position limiting portion 524. The two sides of the driving portion 511 are respectively provided with a limit surface 516 matched with the low position limiting portion 524 and a buffer surface 517 matched with the high position unlocking portion 522. Furthermore, the limit surface 516 and the buffer surface 517 are identical surfaces, which are symmetrically arranged on both sides of the driving portion 511. As shown in Fig. 6 , after assembly, the driving portion 511 is located between the high position unlocking portion 522 and the low position limiting portion 524. The low position limiting portion 524 is against on the limit surface 516, and the limit surface 516 cooperates with the low position limiting portion when the seat ring 2 is closed. The smooth surface reduces the impact force produced by the closing of the low position limiting portion 524, and avoids the damage of the driving portion 511 or the low position limiting portion 524 caused by the long time opening and closing, while the buffer surface 517 contacts the high position unlocking portion 522 when the seat ring 2 is lifted up, which also acts as a buffer. Under the action of the driving portion 511 and the sliding guide surface 521, the sliding guide surface 521 moves smoothly, so as to make the locking member 51 move steadily along the axis direction of the hinge body 41, such that the unlocking is achieved, and the structure is simple, the design is ingenious, and the service life of the parts is increased.

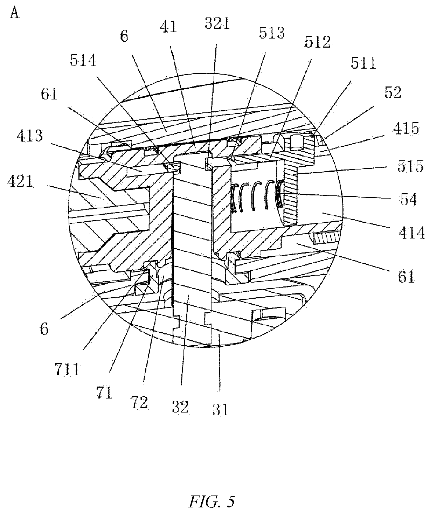

As shown in Fig. 5 , Fig. 8 and Fig. 14 to Fig. 16, in the present embodiment, a raised clamping rib 525 is arranged on the periphery of the driving member 52, an accommodation cavity 61 for accommodating the hinge body 41 is arranged in the hinge tube 6, and the first clamping groove 63 for inserting the clamping rib 525 after assembly is arranged on the inner wall of the accommodation cavity 61. A third opening 62 communicated with the accommodation cavity 61 is respectively arranged on both sides of the hinge tube 6, and a clamping fastener 7 for fixing the buffer 4 is provided in the third opening 62. The outer peripheral surfaces of the hinge body 41 corresponding to two sides of the third opening 62 are provided with annular grooves 416, and both sides of the clamping fastener 7 are provided with snapping portions 71 inserted into the annular grooves 416 after assembly, and the snapping portions 71 extend outward to form a step structure 711 which snaps the inner wall of the accommodation cavity 61 after assembly. The fixed seat 3 includes a bottom base 31 and a clamping column 32 inserted into the hinge body 41 when assembly, and the clamping fastener 7 is further provided with a through hole 72 for the clamping column 32 to pass through during assembly. During assembly, the buffer 4 is inserted into the accommodation cavity 61, the first clamping groove 63 inserted by the clamping rib 525 makes the driving member 52 fixedly fixed in the hinge tube 6 circumferentially, and the driving member 52 rotates synchronously with the rotation of the hinge tube 6. The clamping fastener 7 is used to limit the movement of the buffer 4 along the axis direction of the hinge body 41, and the structure is simple, and the disassembly, installation and replacement of the buffer are simple and quick.

As shown in Fig. 5 , Fig. 8 and Fig. 10 to Fig. 11, in the present embodiment, one end of the clamping column 32 is fixedly connected to the bottom base 31, and the outer peripheral surface of the other end of the clamping column 32 is provided with an inward depression to form a clamping groove 321 matched with the clamping portion 514. The hinge body 41 is provided with a first insertion hole 412, wherein the first insertion hole is a vertical opening and is configured for inserting the clamping column 32 during assembly. The movable space 413 is arranged at the upper end of the first insertion hole 412 and is communicated with the first insertion hole 412, and the clamping hole 513 is aligned to the first insertion hole 412 when the locking member 51 is slidably provided and snapped in the hinge body 41. While the movable space 413 is used for the insertion of the transverse locking portion 512, it plays a guiding role on the transverse locking portion 512 when the fixing device 5 is unlocked and locked.

As shown in Fig. 3 to Fig. 8 and Fig. 12 , in the present embodiment, the buffer 4 further includes a panel oil core 42. The hinge body 41 is further provided with a second insertion hole 417, and the panel oil core 42 is provided with an raised insertion portion 421 which is inserted into the second insertion hole 417 during assembly. The seat ring 2 includes a seat ring body 21 and hinge holes 22, the hinge tube 6 is fixedly connected to the seat ring body 21 and arranged between the two hinge holes 22. One end of the panel oil core 42 is inserted into the hinge hole 22, the panel oil core 42 passes through the hinge hole 22 during assembly, so that the insertion portion 421 is inserted into the second insertion hole 417. The cover plate 1 is also included, the other end of the panel oil core 42 is fixedly connected to the cover plate 1, the panel oil core 421 is further provided with an oil core casing 422, the cover plate 1 is provided with a third insertion hole 11 for fixing the oil core casing 422. And the outer peripheral surfaces of the two oil core casings 422 are respectively provided with an anti-skid sleeve 8 and an anti-skid sheet 9. Furthermore, the hinge hole 22 is sleeved and arranged outside the buffer 4, the oil core casing 422 is fixedly inserted into the third insertion hole 11, so that the oil core casing 422 and the cover plate 1 rotate synchronously. And the insertion portion 421 is arranged on the main body of the panel oil core 42, the oil core casing 422 and the main body of the panel oil core 42 can rotate relatively, and the panel oil core 42 can slow down the falling speed of the cover plate 1 when the cover plate 1 is closed, which plays a buffering function, so as to reduce the impact of the cover plate 1 and the seat ring 2, thereby improving the service lift of the cover plate 1 and the seat ring 2. The anti-skid sleeve 8 and the anti-skid sheet 9 increase the friction between the oil core casing 422 and the third insertion hole 11, so as to prevent the relative rotation of the oil core casing 422 and the third insertion hole 11, playing the buffering role of the panel oil core 42, and further improve the overall use life.

As shown in Fig. 1 to Fig. 5 , a toilet combined cover plate with a toilet seat hinge quick disassembly and assembly device, including a cover plate 1 and a seat ring 2. The hinged tube 6 is fixedly connected to the seat ring 2, the cover plate 1 is rotatably connected to the seat ring 2 through the buffer 4, and the seat ring 2 is detachably connected to the fixed seat 3 through the buffer 4. The toilet seat hinge quick disassembly and assembly device is adopted for the toilet combined cover plate, which simplifies the disassembly and assembly process of the toilet combined cover plate, and the parts are independently assembled, and the assembly and replacement are simple and fast, which improves the user's experience.

As shown in Fig. 1 to Fig. 5 , a toilet with a toilet seat hinge quick disassembly and assembly device, including a cover plate 1, a seat ring 2, a base and a water tank. The hinge tube 6 is fixedly connected to the seat ring 2, the water tank is fixedly arranged on the base, the fixed seat 3 is fixedly connected to the base, the cover plate 1 is rotatably connected to the seat ring 2 through a buffer 4, and the seat ring 2 is detachably connected to the fixed seat 3 through the buffer 4. The toilet adopts the toilet seat hinge quick disassembly and assembly device to simplify the disassembly and assembly process of the toilet combined cover plate, and the parts are assembled independently, and the assembly and replacement are simple and fast, which improves the user's experience.

As shown in Fig. 4 to Fig. 9 , a method for removing the cover plate and the seat ring of the toilet includes the following steps:
- Step S1, the cover plate 1 and the seat ring 2 are turned over so that the seat ring 2 drives the driving member 52 to rotate synchronously through the hinge tube 6 fixedly connected with the seat ring 2;
- Step S2, the driving portion 511 slides along the guide sliding surface 521 and slides to the high position unlocking portion 522, while the locking member 51 moves axially towards one side of the fixed seat 3, so that the clamping portion 514 is separated from the fixed seat 3;
- Step S3, an upward force is applied to the cover plate 1 and the seat ring 2, so that the cover plate 1 and the seat ring 2 are disconnected from the fixed seat 3, and the disassembly is completed.

During disassembling, it is only necessary to rotate the cover plate 1 and the seat ring 2, so that the hinge tube 6 drives the driving member 52 to rotate to the driving portion 511 on the driving member 52, and when the high position unlocking portion 522 is touched, the locking member 51 moves stably along the axis direction of the hinge body 41, so that the clamping portion 514 on the locking member 51 is separated from the clamping groove 321, and the seat ring 1 and the cover plate 2 can be directly taken out, which is convenient and quick. When assembling, it only needs to insert the clamping column 32 of the seat hinge 3 into the first insertion hole 412, and then rotating the cover plate 1 and the seat ring 2, so as to close the cover plate 1 and the seat ring 2 on the toilet to complete the assembly. The design is ingenious, the structure is simple, the disassembly and assembly is easy, and the operation can be completed by one hand, which greatly improves the user's experience.

## Claims

1. A toilet seat hinge quick disassembly and assembly device, comprising a fixed seat (3) and a buffer (4) detachably connected to the fixed seat (3), a hinge tube (6), and a fixing device (5) driving the buffer (4) to be clamped with or separated from the fixed seat (3), and the fixing device (5) comprising a locking member (51), a driving member (52) driving the locking member (51) separated from the fixed seat (3) and a spring (53) keeping a snap-fit of the locking member (51) and the fixed seat (3), the driving member (52) is fixedly fixed in the hinge tube (6) circumferentially; wherein the buffer (4) comprises a hinge body (41), and an outer circumference of the hinge body (41) is provided with an accommodation groove (411); the driving member (52) is rotatably arranged in the accommodation groove (411), the driving member (52) is provided with a guide sliding surface (521), the locking member (51) is provided with a driving portion (511) matched with the guide sliding surface (521); the locking member (51) is provided with a transverse locking portion (512), and one side of the transverse locking portion (512) is provided with a clamping hole (513) for inserting the fixed seat (3) when assembly, an inner wall of the clamping hole (513) is provided with a clamping portion (514) clamped with the fixed seat (3); the hinge body (41) is provided with a movable space (413) and an accommodation hole (414); the transverse locking portion (512) is slidably arranged in the movable space (413), and one side of the movable space (413) facing the accommodation groove (411) is provided with a first opening, an inner wall of the accommodation groove (411) is provided with a second opening (415) communicated with the accommodation hole (414); the other side of the transverse locking portion (512) extends downward to form a vertical driving rod (515) inserted in the accommodation hole (414) after assembly; one end of the spring (54) is against on a bottom wall of the accommodation hole (414); the other end of the spring (54) is against on a side of the vertical driving rod (515) away from the driving portion (511); an angle α is formed between the transverse locking portion (512) and the vertical driving rod (515), and the angle α is a right angle or an inclined angle; a raised clamping rib (525) is arranged on a periphery of the driving member (52), an accommodation cavity (61) for accommodating the hinge body (41) is arranged in the hinge tube (6), and a first clamping groove (63) for inserting the clamping rib (525) is arranged on an inner wall of the accommodation cavity (61); wherein a third opening (62) communicated with the accommodation cavity (61) is respectively arranged on both sides of the hinge tube (6), **characterised in that** a clamping fastener (7) for fixing the buffer (4) is provided in the third opening (62).

2. The toilet seat hinge quick disassembly and assembly device according to claim 1, which is **characterized in that** : the driving member (52) is provided with a low position locking portion (523) and a high position unlocking portion (522) between the two sliding guide surfaces (521), and the sliding guiding surface (521) is configured to connect the high position unlocking portion (522) and the low position locking portion (523); the buffer (4) is clamped with the fixed seat (3) through the fixing device (5) when the driving portion (511) contacts with the low position locking portion (523); the driving portion (511) slides along the sliding surface (521) when the driving member (52) is rotated; the buffer (4) is disconnected from the fixed seat (3) when the driving portion (511) slides to the high position unlocking portion (522).

3. The toilet seat hinge quick disassembly and assembly device according to claim 2, which is **characterized in that** the driving member (52) is provided with a raised low position limiting portion (524), and the low position locking portion (523) is arranged between the sliding guide surface (521) and the low position limiting portion (524).

4. The toilet seat hinge quick disassembly and assembly device according to claim 3, which is **characterized in that** two sides of the driving portion (511) are provided with a limit surface (516) matched with the low position limiting portion (524) and a buffer surface (517) matched with the high position unlocking portion (522).

5. The toilet seat hinge quick disassembly and assembly device according to claim 1, which is **characterized in that** an outer peripheral surfaces of the hinge body (41) corresponding to two sides of the third opening (62) are provided with annular grooves (416), both sides of the clamping fastener (7) are provided with snapping portions (71) inserted into the annular grooves (416) after assembly, and the snapping portions (71) extend outward to form a step structure (711) that snaps the inner wall of the accommodation cavity (61) after assembly; the fixed seat (3) comprises a bottom base (31) and a clamping column (32) inserted into the hinge body (41) when assembly; the clamping fastener (7) is provided with a through hole (72) for the clamping column (32) to pass through during assembly.

6. The toilet seat hinge quick disassembly and assembly device according to claim 5, which is **characterized in that** one end of the clamping column (32) is fixedly connected to the bottom base (31), and an outer peripheral surface of the other end of the clamping column (32) is provided with an inward depression to form a clamping groove (321) matched with the clamping portion (514).

7. The toilet seat hinge quick disassembly and assembly device according to claim 6, which is **characterized in that** : the hinge body (41) is provided with a first insertion hole (412), wherein the first insertion hole is a vertical opening and is configured for inserting the clamping column (32) during assembly; the movable space (413) is arranged at an upper end of the first insertion hole (412) and is communicated with the first insertion hole (412), and the clamping hole (513) is aligned to the first insertion hole (412) when the locking member (51) is slidably provided and snapped in the hinge body (41).

8. The toilet seat hinge quick disassembly and assembly device according to claim 7, which is **characterized in that** the driving portion (511) is fixedly arranged at an upper end of the vertical driving rod (515), so that the driving portion (511) is slidably arranged on the opening (415) after assembly.

9. The toilet seat hinge quick disassembly and assembly device according to claim 8, which is **characterized in that** the buffer (4) comprises a panel oil core (42), the hinge body (41) is provided with a second insertion hole (417), the panel oil core (42) is provided with an raised insertion portion (421) inserted into the second insertion hole (417) during assembly; the seat ring (2) comprises a seat ring body and hinge holes (22), the hinge tube (6) is fixedly connected to the seat ring body (21) and arranged between the two hinge holes (22); one end of the panel oil core (42) is inserted into the hinge hole (22), the panel oil core (42) passes through the hinge hole (22) during assembly, so that the insertion portion (421) is inserted into the second insertion hole (417).

10. The toilet combined cover plate with a toilet seat hinge quick disassembly and assembly device according to any one of claims 1-9, comprising a cover plate (1) and a seat ring (2), which is **characterized in that** a hinged tube (6) is fixedly connected to the seat ring (2), the cover plate (1) is rotatably connected to the seat ring (2) through a buffer (4), and the seat ring (2) is detachably connected to the fixed seat (3) through the buffer (4).

11. The toilet with a toilet seat hinge quick disassembly and assembly device according to any one of claims 1-9, comprising a cover plate (1), a seat ring (2), a base and a water tank, which is **characterized in that** a hinge tube (6) is fixedly connected to the seat ring (2), the water tank is fixedly arranged on the base, a fixed seat (3) is fixedly connected to the base, the cover plate (1) is rotatably connected to the seat ring (2) through a buffer (4), and the seat ring (2) is detachably connected to the fixed seat (3) through the buffer (4).

## Patentansprüche

1. Vorrichtung für die schnelle Montage und Demontage eines Toilettensitzscharniers, umfassend einen festen Sitz (3) und einen abnehmbar mit dem festen Sitz (3) verbundenen Puffer (4), ein Scharnierrohr (6) und eine Befestigungsvorrichtung (5), die den Puffer (4) so steuert, dass er mit dem festen Sitz (3) geklemmt oder von diesem getrennt wird, wobei die Befestigungsvorrichtung (5) ein Verriegelungselement (51), ein Antriebselement (52), das das Verriegelungselement (51) getrennt vom festen Sitz (3) steuert, und eine Feder (53) umfasst, die einen Schnappverschluss des Verriegelungselements (51) und des festen Sitzes (3) hält, und das Antriebselement (52) im Scharnierrohr (6) umfangsseitig fest befestigt ist, wobei der Puffer (4) einen Scharnierkörper (41) umfasst und ein Außenumfang des Scharnierkörpers (41) mit einer Aufnahmenut (411) versehen ist, das Antriebselement (52) in der Aufnahmenut (411) drehbar angeordnet ist, das Antriebselement (52) mit einer Führungsgleitfläche (521) versehen ist, das Verriegelungselement (51) mit einem Antriebsabschnitt (511) versehen ist, der passend zur Führungsgleitfläche (521) ausgebildet ist, das Verriegelungselement (51) mit einem Querverriegelungsabschnitt (512) versehen ist und eine Seite des Querverrieglungsabschnitts (512) mit einem Klemmloch (513) zum Einführen des festen Sitzes (3) bei der Montage versehen ist, eine Innenwand des Klemmlochs (513) mit einem Klemmabschnitt (514) versehen ist, der mit dem festen Sitz (3) geklemmt ist, der Scharnierkörper (41) mit einem beweglichen Raum (413) und einem Aufnahmeloch (414) versehen ist, der Querverriegelungsabschnitt (512) verschiebbar im beweglichen Raum (413) angeordnet ist und eine Seite des beweglichen Raums (413), die der Aufnahmenut (411) zugewandt ist, mit einer ersten Öffnung versehen ist, eine Innenwand der Aufnahmenut (411) mit einer zweiten Öffnung (415) versehen ist, die mit dem Aufnahmeloch (414) in Kommunikation gesetzt ist, die andere Seite des Querverriegelungsabschnitts (512) sich nach unten erstreckt, um eine vertikale Antriebsstange (515) zu bilden, die nach der Montage in das Aufnahmeloch (414) eingeführt wird, ein Ende der Feder (54) gegen eine untere Wand des Aufnahmelochs (414) angeordnet ist, das andere Ende der Feder (54) gegen eine Seite der vertikalen Antriebsstange (515) entfernt vom Antriebsabschnitt (511) angeordnet ist, ein Winkel a zwischen dem Querverriegelungsabschnitt (512) und der vertikalen Antriebsstange (515) gebildet ist und der Winkel a ist ein rechter Winkel oder ein Neigungswinkel ist, eine erhöhte Klemmrippe (525) an einer Umfangslänge des Antriebselements (52) angeordnet ist, ein Aufnahmehohlraum (61) zur Aufnahme des Scharnierkörpers (41) im Scharnierrohr (6) angeordnet ist und eine erste Klemmnut (63) zum Einführen der Klemmrippe (525) auf einer Innenwand des Aufnahmehohlraums (61) angeordnet ist,
wobei eine dritte Öffnung (62), die mit dem Aufnahmehohlraum (61) in Kommunikation gesetzt ist, jeweils auf beiden Seiten des Scharnierrohrs (6) angeordnet ist, **dadurch gekennzeichnet, dass** in der dritten Öffnung (62) eine Klemmbefestigung (7) zum Befestigen des Puffers (4) bereitgestellt ist.

2. Vorrichtung für die schnelle Montage und Demontage eines Toilettensitzscharniers nach Anspruch 1, die **dadurch gekennzeichnet ist, dass** das Antriebselement (52) mit einem Verriegelungsabschnitt in niedriger Position (523) und einem Entriegelungsabschnitt in hoher Position (522) zwischen den beiden Gleitführungsflächen (521) versehen ist und die Gleitführungsfläche (521) ausgelegt ist, um den Entriegelungsabschnitt in hoher Position (522) und den Verriegelungsabschnitt in niedriger Position (523) zu verbinden, der Puffer (4) mit dem festen Sitz (3) durch die Befestigungsvorrichtung (5) geklemmt ist, wenn der Antriebsabschnitt (511) den Verriegelungsabschnitt in niedriger Position (523) berührt, der Antriebsabschnitt (511) entlang der Gleitfläche (521) gleitet, wenn das Antriebselement (52) gedreht wird, der Puffer (4) vom festen Sitz (3) getrennt wird, wenn der Antriebsabschnitt (511) zum Entriegelungsabschnitt in hoher Position (522) gleitet.

3. Vorrichtung für die schnelle Montage und Demontage eines Toilettensitzscharniers nach Anspruch 2, die **dadurch gekennzeichnet ist, dass** das Antriebselement (52) mit einem erhöhten Positionsbegrenzungsabschnitt in niedriger Position (524) versehen ist und der Verriegelungsabschnitt in niedriger Position (523) zwischen der Gleitführungsfläche (521) und dem Positionsbegrenzungsabschnitt in niedriger Position (524) angeordnet ist.

4. Vorrichtung für die schnelle Montage und Demontage eines Toilettensitzscharniers nach Anspruch 3, die **dadurch gekennzeichnet ist, dass** zwei Seiten des Antriebsabschnitts (511) mit einer Grenzfläche (516) versehen sind, die passend zum Positionsbegrenzungsabschnitt in niedriger Position (524) ausgebildet ist, und einer Pufferfläche (517), die passend zum Entriegelungsabschnitt in hoher Position (522) ausgebildet ist.

5. Vorrichtung für die schnelle Montage und Demontage eines Toilettensitzscharniers nach Anspruch 1, die **dadurch gekennzeichnet ist, dass** eine äußere Umfangsfläche des Scharnierkörpers (41), die zwei Seiten der dritten Öffnung (62) entspricht, mit Ringnuten (416) versehen ist, beide Seiten der Klemmbefestigung (7) mit Schnappabschnitten (71) versehen sind, die nach der Montage in die Ringnuten (416) eingeführt werden, und die Schnappabschnitte (71) sich nach außen erstrecken, um nach der Montage eine Stufenstruktur (711) zu bilden, die in die Innenwand des Aufnahmehohlraums (61) einrastet, der feste Sitz (3) eine untere Basis (31) und eine Klemmsäule (32) umfasst, die bei der Montage in den Scharnierkörper (41) eingeführt wird, und die Klemmbefestigung (7) mit einem Durchgangsloch (72) für die Klemmsäule (32) für die Durchführung während der Montage versehen ist.

6. Vorrichtung für die schnelle Montage und Demontage eines Toilettensitzscharniers nach Anspruch 5, die **dadurch gekennzeichnet ist, dass** ein Ende der Klemmsäule (32) fest mit der unteren Basis (31) verbunden ist und eine äußere Umfangsfläche des anderen Endes der Klemmsäule (32) mit einer nach innen gerichteten Vertiefung versehen ist, um eine Klemmnut (321) zu bilden, die passend zum Klemmabschnitt (514) ausgebildet ist.

7. Vorrichtung für die schnelle Montage und Demontage eines Toilettensitzscharniers nach Anspruch 6, die **dadurch gekennzeichnet ist, dass** der Scharnierkörper (41) mit einem ersten Einführloch (412) versehen ist, wobei das erste Einführloch eine vertikale Öffnung ist und zum Einführen der Klemmsäule (32) während der Montage ausgelegt ist, der bewegliche Raum (413) an einem oberen Ende des ersten Einführlochs (412) angeordnet ist und mit dem ersten Einführloch (412) in Kommunikation gesetzt ist und das Klemmloch (513) zum ersten Einführloch (412) ausgerichtet ist, wenn das Verriegelungselement (51) verschiebbar vorgesehen ist und im Scharnierkörper (41) eingerastet ist.

8. Vorrichtung für die schnelle Montage und Demontage eines Toilettensitzscharniers nach Anspruch 7, die **dadurch gekennzeichnet ist, dass** der Antriebsabschnitt (511) fest an einem oberen Ende der vertikalen Antriebsstange (515) angeordnet ist, sodass der Antriebsabschnitt (511) nach der Montage an der Öffnung (415) verschiebbar angeordnet ist.

9. Vorrichtung für die schnelle Montage und Demontage eines Toilettensitzscharniers nach Anspruch 8, die **dadurch gekennzeichnet ist, dass** der Puffer (4) einen Plattenölkern (42) umfasst, der Scharnierkörper (41) mit einem zweiten Einführloch (417) versehen ist, der Plattenölkern (42) mit einem erhöhten Einführabschnitt (421) versehen ist, der während der Montage in das zweite Einführloch (417) eingeführt wird, der Sitzring (2) einen Sitzringkörper und Scharnierlöcher (22) umfasst, das Scharnierrohr (6) fest mit dem Sitzringkörper (21) verbunden und zwischen den beiden Scharnierlöchern (22) angeordnet ist, ein Ende des Plattenölkerns (42) in das Scharnierloch (22) eingeführt ist, der Plattenölkern (42) während der Montage durch das Scharnierloch (22) geführt wird, sodass der Einführabschnitt (421) in das zweite Einführloch (417) eingeführt wird.

10. Toilette in Kombination mit einer Abdeckplatte mit einer Vorrichtung für die schnelle Montage und Demontage eines Toilettensitzscharniers nach einem der Ansprüche 1 bis 9, umfassend eine Abdeckplatte (1) und einen Sitzring (2), die **dadurch gekennzeichnet ist, dass** ein Scharnierrohr (6) fest mit dem Sitzring (2) verbunden ist, die Abdeckplatte (1) durch einen Puffer (4) drehbar mit dem Sitzring (2) verbunden ist und der Sitzring (2) abnehmbar durch den Puffer (4) mit dem festen Sitz (3) verbunden ist.

11. Toilette mit einer Vorrichtung für die schnelle Montage und Demontage eines Toilettensitzscharniers nach einem der Ansprüche 1 bis 9, umfassend eine Abdeckplatte (1), einen Sitzring (2), eine Basis und einen Wasserkasten, die **dadurch gekennzeichnet ist, dass** ein Scharnierrohr (6) fest mit dem Sitzring (2) verbunden ist, der Wasserkasten fest auf der Basis angeordnet ist, ein fester Sitz (3) fest mit der Basis verbunden ist, die Abdeckplatte (1) durch einen Puffer (4) drehbar mit dem Sitzring (2) verbunden ist und der Sitzring (2) abnehmbar durch den Puffer (4) mit dem festen Sitz (3) verbunden ist.

## Revendications

1. Dispositif de démontage et de montage rapide de charnière de siège de toilette, comprenant un siège fixe (3) et un tampon (4) relié de manière amovible au siège fixe (3), un tube de charnière (6) et un dispositif de fixation (5) entraînant le tampon (4) de façon à être serré avec ou séparé du siège fixe (3), et le dispositif de fixation (5) comprend un élément de verrouillage (51), un élément d'entraînement (52) entraînant l'élément de verrouillage (51) séparé du siège fixe (3) et un ressort (53) maintenant un encliquetage de l'élément de verrouillage (51) et du siège fixe (3), l'élément d'entraînement (52) est fixé de manière fixe dans le tube de charnière (6) de manière circonférentielle ; dans lequel le tampon (4) comprend un corps de charnière (41), et une circonférence externe du corps de charnière (41) est pourvue d'une rainure de réception (411) ; l'élément d'entraînement (52) est disposé de manière rotative dans la rainure de réception (411), l'élément d'entraînement (52) est pourvu d'une surface de guidage coulissante (521), l'élément de verrouillage (51) est pourvu d'une partie d'entraînement (511) adaptée à la surface de guidage coulissante (521) ; l'élément de verrouillage (51) est pourvu d'une partie de verrouillage transversale (512), et un côté de la partie de verrouillage transversale (512) est pourvu d'un trou de serrage (513) pour insérer le siège fixe (3) lors du montage, une paroi interne du trou de serrage (513) est pourvue d'une partie de serrage (514) serrée avec le siège fixe (3) ; le corps de charnière (41) est pourvu d'un espace mobile (413) et d'un trou de réception (414) ; la partie de verrouillage transversale (512) est disposée de manière coulissante dans l'espace mobile (413), et un côté de l'espace mobile (413) faisant face à la rainure de réception (411) est pourvu d'une première ouverture, une paroi interne de la rainure de réception (411) est pourvue d'une deuxième ouverture (415) en communication avec le trou de réception (414) ; l'autre côté de la partie de verrouillage transversale (512) s'étend vers le bas pour former une tige d'entraînement verticale (515) insérée dans le trou de logement (414) après montage ; une extrémité du ressort (54) est contre une paroi inférieure du trou de réception (414) ; l'autre extrémité du ressort (54) est contre un côté de la tige d'entraînement verticale (515) à distance de la partie d'entraînement (511) ; un angle a est formé entre la partie de verrouillage transversale (512) et la tige d'entraînement verticale (515), et l'angle a est un angle droit ou un angle incline ; une nervure de serrage (525) surélevée est disposée sur une périphérie de l'élément d'entraînement (52), une cavité de réception (61) pour abriter le corps de charnière (41) est disposée dans le tube de charnière (6), et une première fente de serrage (63) pour insérer la nervure de serrage (525) est disposée sur une paroi interne de la cavité de réception (61) ;
dans lequel une troisième ouverture (62) en communication avec la cavité de réception (61) est respectivement disposée des deux côtés du tube de charnière (6), **caractérisé en ce qu'**un élément de fixation de serrage (7) pour fixer le tampon (4) est disposé dans la troisième ouverture (62).

2. Dispositif de démontage et de montage rapide de charnière de siège de toilette selon la revendication 1, qui est **caractérisé en ce que** : l'élément d'entraînement (52) est pourvu d'une partie de verrouillage de position basse (523) et d'une partie de déverrouillage de position haute (522) entre les deux surfaces de guidage coulissantes (521), et la surface de guidage coulissante (521) est configurée pour relier la partie de déverrouillage de position haute (522) et la partie de verrouillage de position basse (523) ; le tampon (4) est serré avec le siège fixe (3) à travers le dispositif de fixation (5) lorsque la partie d'entraînement (511) entre en contact avec la partie de verrouillage de position basse (523) ; la partie d'entraînement (511) coulisse le long de la surface coulissante (521) lorsque l'élément d'entraînement (52) est mis en rotation ; le tampon (4) est déconnecté du siège fixe (3) lorsque la partie d'entraînement (511) coulisse vers la partie de déverrouillage de position haute (522).

3. Dispositif de démontage et de montage rapide de charnière de siège de toilette selon la revendication 2, qui est **caractérisé en ce que** l'élément d'entraînement (52) est pourvu d'une partie de limitation de position basse (524) surélevée, et la partie de verrouillage de position basse (523) est disposée entre la surface de guidage coulissante (521) et la partie de limitation de position basse (524).

4. Dispositif de démontage et de montage rapide de charnière de siège de toilette selon la revendication 3, qui est **caractérisé en ce que** deux côtés de la partie d'entraînement (511) sont pourvus d'une surface limite (516) adaptée à la partie de limitation de position basse (524) et d'une surface tampon (517) adaptée à la partie de déverrouillage de position haute (522).

5. Dispositif de démontage et de montage rapide de charnière de siège de toilette selon la revendication 1, qui est **caractérisé en ce qu'**une surface périphérique externe du corps de charnière (41) correspondant à deux côtés de la troisième ouverture (62) est pourvue de rainures annulaires (416), les deux côtés de l'élément de fixation de serrage (7) sont pourvus de parties d'encliquetage (71) insérées dans les rainures annulaires (416) après montage, et les parties d'encliquetage (71) s'étendent vers l'extérieur pour former une structure étagée (711) qui s'encliquette à la paroi interne de la cavité de réception (61) après montage ; le siège fixe (3) comprend une base inférieure (31) et une colonne de serrage (32) insérée dans le corps de charnière (41) lors du montage ; l'élément de fixation de serrage (7) est pourvu d'un trou traversant (72) pour que la colonne de serrage (32) passe à travers pendant le montage.

6. Dispositif de démontage et de montage rapide de charnière de siège de toilette selon la revendication 5, qui est **caractérisé en ce qu'**une extrémité de la colonne de serrage (32) est reliée de manière fixe à la base inférieure (31), et une surface périphérique externe de l'autre extrémité de la colonne de serrage (32) est pourvue d'une dépression vers l'intérieur pour former une rainure de serrage (321) adaptée à la partie de serrage (514).

7. Dispositif de démontage et de montage rapide de charnière de siège de toilette selon la revendication 6, qui est **caractérisé en ce que** : le corps de charnière (41) est pourvu d'un premier trou d'insertion (412), dans lequel le premier trou d'insertion est une ouverture verticale et est configuré pour insérer la colonne de serrage (32) pendant le montage ; l'espace mobile (413) est disposé au niveau d'une extrémité supérieure du premier trou d'insertion (412) et est en communication avec le premier trou d'insertion (412), et le trou de serrage (513) est aligné sur le premier trou d'insertion (412) lorsque l'élément de verrouillage (51) est disposé de manière coulissante et encliqueté dans le corps de charnière (41).

8. Dispositif de démontage et de montage rapide de charnière de siège de toilette selon la revendication 7, qui est **caractérisé en ce que** la partie d'entraînement (511) est disposée de manière fixe au niveau d'une extrémité supérieure de la tige d'entraînement verticale (515), de sorte que la partie d'entraînement (511) est disposée de manière coulissante sur l'ouverture (415) après montage.

9. Dispositif de démontage et de montage rapide de charnière de siège de toilette selon la revendication 8, qui est **caractérisé en ce que** le tampon (4) comprend un noyau à huile de panneau (42), le corps de charnière (41) est pourvu d'un deuxième trou d'insertion (417), le noyau à huile de panneau (42) est pourvu d'une partie d'insertion (421) surélevée insérée dans le deuxième trou d'insertion (417) pendant le montage ; la bague de siège (2) comprend un corps de bague de siège et des trous de charnière (22), le tube de charnière (6) est relié de manière fixe au corps de bague de siège (21) et disposé entre les deux trous de charnière (22) ; une extrémité du noyau à huile de panneau (42) est insérée dans le trou de charnière (22), le noyau à huile de panneau (42) passe à travers le trou de charnière (22) pendant le montage, de sorte que la partie d'insertion (421) est insérée dans le deuxième trou d'insertion (417).

10. Plaque couvercle combinée de toilette avec un dispositif de démontage et de montage rapide de charnière de siège de toilette selon l'une quelconque des revendications 1-9, comprenant une plaque couvercle (1) et une bague de siège (2), qui est **caractérisée en ce qu'**un tube de charnière (6) est relié de manière fixe à la bague de siège (2), la plaque couvercle (1) est reliée de manière rotative à la bague de siège (2) à travers un tampon (4), et la bague de siège (2) est reliée de manière amovible au siège fixe (3) à travers le tampon (4).

11. Toilette avec un dispositif de démontage et de montage rapide de charnière de siège de toilette selon l'une quelconque des revendications 1-9, comprenant une plaque couvercle (1), une bague de siège (2), une base et un réservoir d'eau, qui est **caractérisée en ce qu'**un tube de charnière (6) est relié de manière fixe à la bague de siège (2), le réservoir d'eau est disposé de manière fixe sur la base, un siège fixe (3) est relié de manière fixe à la base, la plaque couvercle (1) est reliée de manière rotative à la bague de siège (2) à travers un tampon (4), et la bague de siège (2) est reliée de manière amovible au siège fixe (3) à travers le tampon (4).
